(19)

Europäisches Patentamt

European Patent Office

Office européen des brevets

(11) **EP 4 047 823 A1**

(12) **EUROPEAN PATENT APPLICATION**

(43) Date of publication:
**24.08.2022 Bulletin 2022/34**

(21) Application number: **22157584.8**

(22) Date of filing: **18.02.2022**

(51) International Patent Classification (IPC):
**H04B 1/40** *(2015.01)* **H01Q 1/36** *(2006.01)*

(52) Cooperative Patent Classification (CPC):
**H04B 1/40; H01Q 1/36**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2021 IT 202100003935**

(71) Applicant: **Montisci, Marcello**
**10040 Leini (TO) (IT)**

(72) Inventor: **Montisci, Marcello**
**10040 Leini (TO) (IT)**

(74) Representative: **Marietti, Andrea et al**
**Marietti, Gislon e Trupiano S.r.l.**
**Via Larga, 16**
**20122 Milano (IT)**

(54) **DEVICE AND USE OF AN ANTENNA FOR VERY LOW POWER RADIO TRANSMISSION AND RECEPTION**

(57) Radio transmitting and/or receiving device adapted to transmit and/or receive at least at one pre-set frequency (f), comprising an antenna comprising a main loop (1), a secondary loop (7), a powering point (2) which allows a separate power supply of the main loop (1) and secondary loop (7), the main loop (1) having a cut (4), the perimeter (P) of the main loop being between a minimum value P_MIN = Y·0.85 and a maximum value P_MAX = Y·1.15, where Y is the value expressed in mm obtained by the following formula:

$$Y = 26708.9 \cdot f^{-0.7835}$$

wherein "f" is said pre-set frequency expressed in MHz.

FIG.1

EP 4 047 823 A1

**Description**

The present invention relates to a radio transmitting and/or receiving device of small dimensions, adapted to transmit and/or receive at least at one pre-set frequency by using a very low power, and further relates to the use of an antenna for transmitting and/or receiving at a pre-set frequency by using a very low power according to the preamble of the main claims.

For the transmission and reception of electromagnetic waves, antennas of different types, which have different characteristics in terms of selectivity and directivity, are used.

In particular, the digital communication systems use multiple frequency bands assigned by international organisations between 100 MHz and 500 GHz, e.g. the 5G system in Europe uses from 3.4 to 3.8 GHz and from 24.25 to 27.5 GHz; in the USA, on the other hand, from 2.5 to 2.7 GHz, from 3.7 to 3.98 GHz, from 27 to 28.35 GHz and from 47.2 to 48.2 GHz. Digital communication systems include both cellular phones and data transmitting devices used for the Internet or to communicate with remote devices (Internet of Things - IoT).

The frequency bands used for both cellular phone transmissions and data transmission are becoming increasingly crowded due to the growing number of devices that use them.

In many sectors of the art, devices which transmit or receive data and commands via radio are used.

In some sectors, these devices are arranged in remote areas without electrical grid, so that they use a battery to power the transmitting and receiving device.

For example, in the irrigation sector, devices such as valves and meters are often arranged in remote areas without electrical grid.

An irrigation valve needs to be remotely controlled and, similarly, a meter must regularly transmit data related to the water flow rate passing therethrough. This is achieved by transmitting and receiving radio signals by means of battery-powered transmitting and receiving radio devices.

Therefore, it is important that these valves, meters or other equipment are equipped with transmitting and receiving devices that use very little electrical power, so that the batteries with which they are equipped last a long time.

Typically, for certain installations in the irrigation sector, it is required that the radio receiving or transmitting device works for at least three years without requiring battery replacement. To reduce battery consumption, some valves or meters have a radio receiving device that turns on for short time intervals at pre-set instants, and then switches off again.

During these time intervals, the valves or meters receive or transmit data.

This data can be command signals, e.g. for the opening or closing of a valve, or measured values, such as e.g. the flow rate value, that must be transmitted to the control unit which can be even located tens of kilometres away.

If reception was not successful, e.g. due to the excessive weakness of the signal or interference with other radio signals or background noise, the transmission must be repeated and this results in greater energy consumption.

The need to receive and/or transmit radio signals by using a very low power is not only typical of the irrigation sector but of many other sectors, such as that of cellular telephones, for which it is very important that the batteries last for a long time and this can be achieved by limiting consumption. It is also important that the electronic devices used have small dimensions so that they can be easily inserted into a protection box.

For example, it is important that the antenna and electronic devices comprised in a cellular phone have small dimensions in order to limit its encumbrance.

Also for the valves or meters used in irrigation in remote positions, it is important that the dimensions of the antenna and other electronic transmitting and receiving components are small, so that they can be easily hidden and protected from tampering and vandalism acts.

An attempt is usually made to protect the radio transmitting devices by inserting them inside a protection box.

Object of the present invention is therefore to implement a radio transmitting and/or receiving device of small dimensions, which is adapted to transmit and/or receive at least at one pre-set frequency by using a very low power.

Object of the present invention is also to use an antenna so as to allow radio signals to be transmitted and received at least at one pre-set frequency by using a very low power.

A further object of the present invention is to reduce weight and encumbrance of the electronic devices used for radio transmission and/or reception, including the antennas.

Said objects are achieved by a radio transmitting and/or receiving device and by the use of an antenna whose inventive characteristics are emphasised by the claims.

The invention will be better understood from the following detailed description, provided purely by way of non-limiting example, of a preferred embodiment depicted in the accompanying drawings, in which:

Fig. 1 shows the antenna of the transmitting and/or receiving device according to the invention in one of the preferred embodiments;

Fig. 2 shows a graph of the diameter depending on the frequency of the resonance peak of circular-shaped antennas in which the frequency f is shown on the abscissa and the diameter D of the antenna is shown on the ordinate;

Fig. 3 shows the experimental measurement of the frequency response for a device according to the invention, comprising an antenna with circular shape and diameter of 40 mm;

Fig. 4 shows the experimental measurement of the frequency response for a device according to the invention, comprising a circular antenna with diameter equal to 28 mm;

Fig. 5 shows the experimental measurement of the frequency response for a device according to the invention, comprising a circular antenna with diameter equal to 20 mm.

Fig. 6 shows a graph of the perimeter P, equal to the sum of the length of the antenna arms, depending on the frequency of the resonance peak for circular-shaped antennas, in which the frequency f in MHz is shown on the abscissa and the perimeter P in millimetres is shown on the ordinate;

Fig. 7 shows a square- or rhomboidal-shaped antenna of the transmitting device according to the invention;

Fig. 8 shows the experimental measurement of the frequency response of a square-shape antenna with side equal to 30 mm;

Fig. 9 shows the graph, obtained by means of a numerical simulation programme, of the frequency response of a device according to the invention, comprising an antenna with inner diameter of 38.6 mm and thickness of 1 mm.

The crowding of radio transmission bands, particularly digital radio bands, often results in interference that requires increasing the power of the signal transmitted.

In order to limit the power necessary in transmission or reception, band-pass filters, which eliminate signals on near frequencies, can be used, limiting interference.

An electronic band-pass filter, to be connected to the antenna, which allows a very narrow band to pass, however, comprises several electronic components and is quite bulky and heavy.

For this reason, such a filter cannot be used in small devices in which the dimensions and weight are important, such as e.g. cellular phones, nor can it be easily protected from tampering and vandalism acts, except by using very heavy and bulky protection boxes.

Such a device that works as a filter further requires a certain electric power for the operation of its components, so that its presence increases the consumption of the receiving/transmitting device that uses it.

For these reasons, in order to reduce the power necessary for the transmission and reception and, at the same time, to reduce the weight and encumbrance of the transmitting and receiving device, it is often preferable not to use these filtering devices.

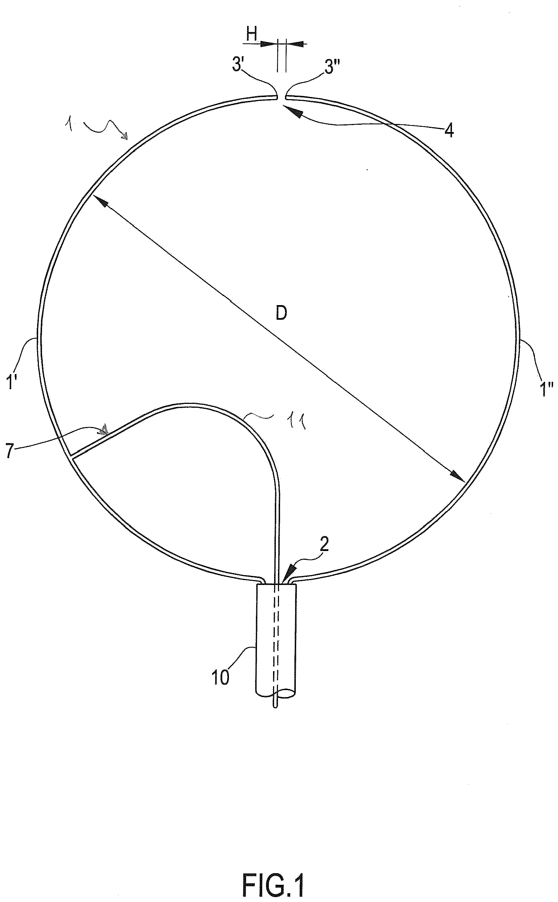

With reference to figure 1, it has been surprisingly found that an antenna which comprises a main loop 1 with a powering point 2, a secondary loop 7 with dimensions smaller than the main loop 1, which branches off from the powering point 2 and joins an intermediate point of the main loop 1, said main loop 1 having a cut 4 equal to about 1 mm opposite the powering point 2, allows a highly selective transmission at a pre-set frequency f without any additional device that implements a band-pass filter, when the diameter D of said main loop 1 is equal to about the value D expressed in mm obtained by the following formula:

$$D = 8501.7 \cdot f^{-0.7835} \quad (1)$$

wherein "f" is said pre-set frequency expressed in MHz.

This allows to implement a radio transmitting and/or receiving device adapted to transmit and/or receive in a highly selective manner at least at one pre-set frequency f, said device comprising the antenna, as described above and depicted in Fig. 1.

Fig. 1 shows that the antenna comprises a circular-shaped main loop 1 which comprises two arms 1' and 1" and a secondary loop 7, also called power supply loop, which branches off from the powering point 2 to join one of the arms 1', 1" of the main loop.

The surface circumscribed by the main loop is five to seven times the circumscribed surface of the secondary loop 7, preferably about six times.

Both the main loop 1 and the secondary loop 7 are made of an electrically conductive material, such as copper or aluminium.

The first and second arms 1' and 1" are electrically joined at the powering point 2 and can be made of a single piece of conductive material.

Said first and second arms 1' and 1" terminate with their respective ends 3' and 3" spaced apart by the cut 4.

A coaxial cable 10 comprising a central conductor or inner cable or core and an outer conductor, such as e.g. a mesh or outer braid, is connected to the powering point 2 of the antenna of the device according to the invention, so that the outer conductor is connected to both the first and second arms 1', 1", thus to the main loop 1, and the central conductor is connected instead to the secondary loop 7.

Instead of a coaxial cable it is also possible to have a micro-strip.

It is possible that an open circuit element, such as a capacitor, is interposed between the ends 3', 3". A variable capacitor allows to fine-tune the antenna resonance frequency, leaving its diameter unchanged. Increasing the capacitance of the capacitor reduces the working frequency at which the highly selective transmission can be achieved.

This capacitor may also be implemented by mutually folding and facing the ends 3' and 3" of the two arms 1' and 1", so as to form the two plates of a capacitor.

A variation in the dimension of the cut 4 can cause the working frequency f to vary with respect to the rated value given by the formula (1).

The formula (1) provides a "rated" or reference value that may be slightly varied by changing the amplitude of the cut or the capacitance of the capacitor.

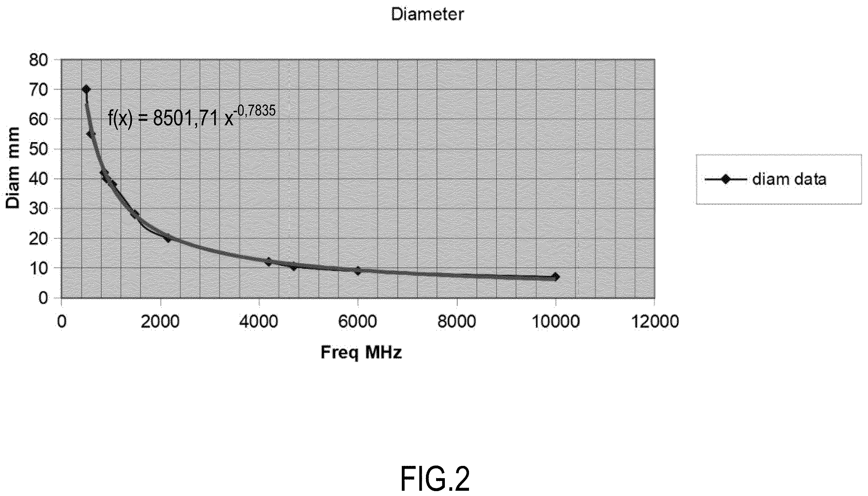

The high selectivity given by the use of a circular antenna of diameter D, as described above and depicted in Fig. 1, at a working frequency according to the formula (1), allows to achieve a radio transmitting and/or receiving device that eliminates the noise that is close to the pre-set frequency f, without using a filter which would be cumbersome, heavy and would increase the energy consumption. Fig. 2 shows the graph of the formula (1) in which the frequency f in MHz is shown on the abscissa and the diameter D in millimetres is shown on the ordinate: each diameter D corresponds to a resonance frequency f and vice versa, each working frequency f, at which resonance is intended to be obtained, corresponds to a diameter D of the antenna.

Fig. 2 shows both the exponential interpolating curve depicted by the formula (1) and eleven experimental data obtained from eleven circular antennas of different diameter as in the following table:

| Freq. MHz | Diameter in mm |
|---|---|
| 500 | 70 |
| 600 | 55 |
| 868 | 42 |
| 915 | 40 |
| 1034 | 38 |
| 1486 | 28 |
| 2164 | 20 |
| 4200 | 12 |
| 4700 | 10.5 |
| 6000 | 9 |
| 10000 | 7 |

In particular, by carrying out experiments with circular antennas of different diameter, it was possible to measure a value of the resonance peak depending on the diameter as shown hereinafter:

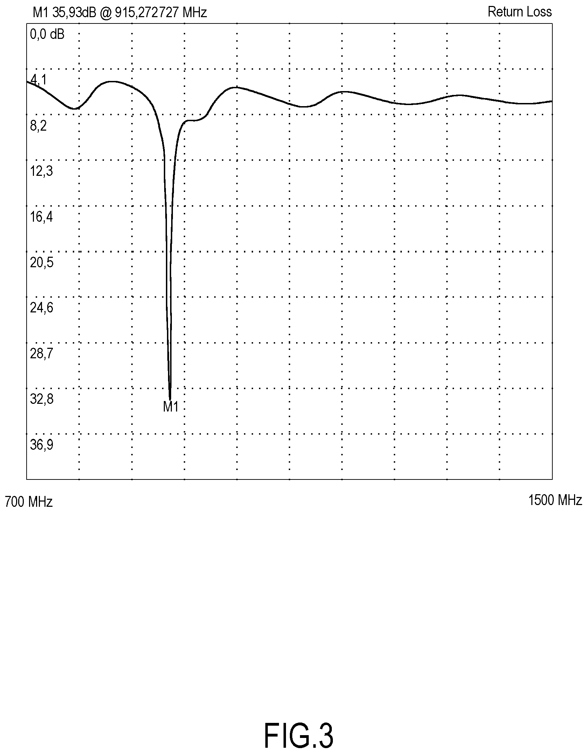

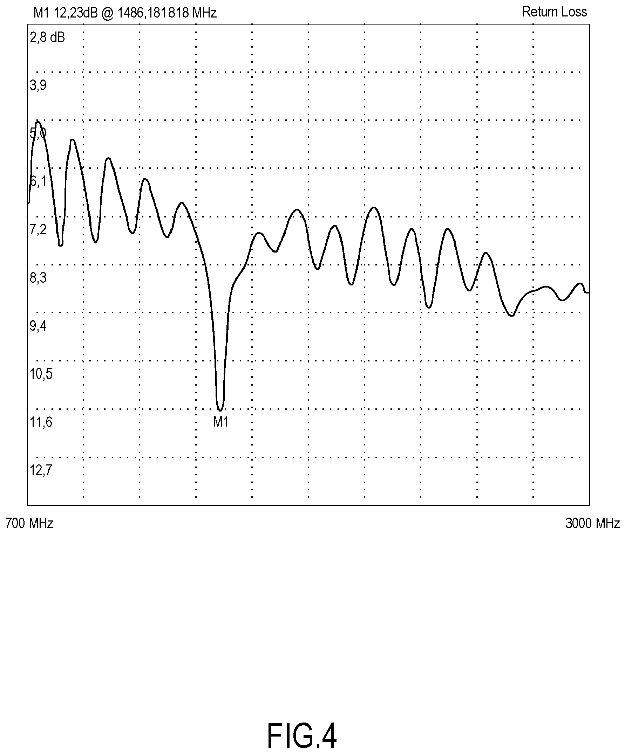

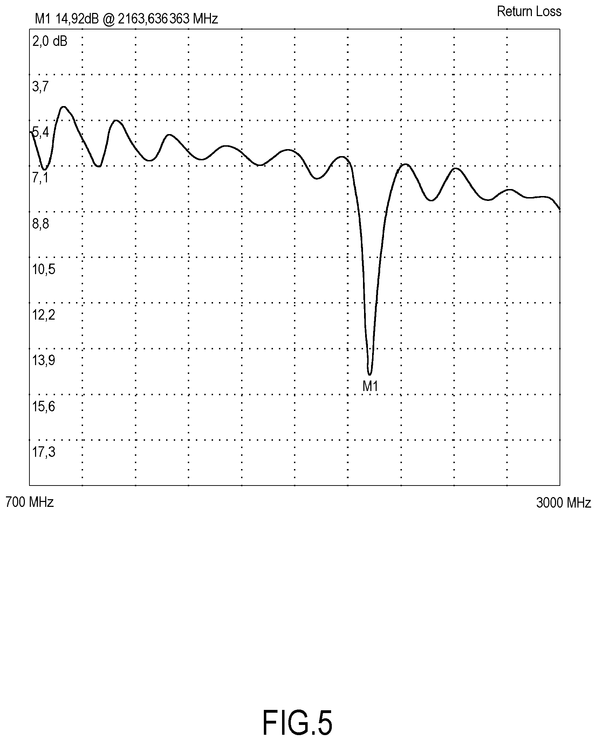

D = 40 mm peak at f = 915 MHz (Fig. 3)
D = 28 mm peak at f = 1486 MHz (Fig. 4)
D = 20 mm peak at f = 2164 MHz (Fig. 5)

Figures 3, 4 and 5 show, by way of example, the experimental measurement of some of the prototype antennas implemented with a circular shape and a diameter of 40 mm, 28mm and 20mm, respectively, from which the width of the peak and, therefore, the selectivity of the device can also be seen.

The terms "frequency response", "resonance curve" and "standing wave ratio" (abbreviated SWR) are to be considered synonymous.

The electromagnetic behaviour of the antenna object of the invention, which has been verified by powering the antenna with radio frequency, is mutually expected and also verifiable in reception where the frequency point, where there is the best coupling, allows the maximum signal transfer between the electromagnetic field and the receiver, while moving away from the best coupling point, the signal transfer rapidly degrades.

The "standing wave ratio" is achieved by powering the antenna, varying the frequency continuously between two extreme values and observing at which frequencies the antenna absorbs and, therefore, radiates the energy introduced through the coaxial cable and at which other frequencies the antenna does not absorb but reflects the energy sent thereto through the coaxial cable. The non-radiated energy is reflected back to the transmitter by dissipating into heat or, more accurately, it reduces itself due to impedance mismatch.

Since the working frequency of the antenna according to the invention depends on the diameter, on the length of the arms of the main loop and also on the capacitive coupling of their ends, values which may not be known with precision, this method can be used to exactly identify the working frequency of an antenna according to the invention, once implemented.

For example, Fig. 3 shows a pronounced resonance peak at 915 MHz for a prototype antenna with circular main loop and diameter of 40 mm. The graph allows to measure both the sensitivity and the selectivity of the antenna at the frequency of 915 MHz: a greater amplitude of the peak corresponds to a greater standing wave ratio and a smaller peak width corresponds to a greater selectivity.

For the graph of Fig. 3, it is noted that with respect to the point of maximum radiation, where the reflected power, therefore not radiated, is 35.93 dB lower than the radiated power, thus approximately 1/4000 in power, at a distance of +/- 5 MHz from the peak the reflected power is 20 dB higher, thus 1/40 of the radiated power.

Experimental tests have shown that good selectivity is achieved even when the antenna is not circular, but has a generally annular shape.

Furthermore, an experiment carried out by bending a circular antenna out of the plane by about 15° showed that performance did not change much. For this reason, the invention is also considered to relate to antennas that are not circular and do not lie on a plane.

In the more general case of an antenna which does not lie on a plane, the formula that allows to obtain the perimeter P of the antenna, said perimeter P being equal to the sum of the length of the first arm 1' and the second arm 1'' (the cut 4, which is very small compared to the length of the two arms, is neglected), depending on the frequency f of use of the same antenna, so as to obtain the desired characteristics of high selectivity and sensitivity, is the following:

$$P = 26708.9 \cdot f^{-0.7835} \quad (2)$$

Where P is expressed in millimetres and f in MHz.

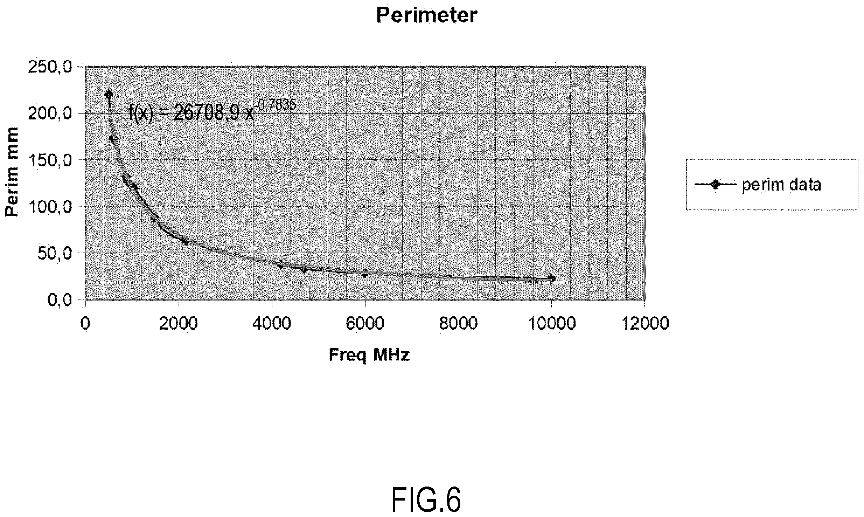

Fig. 6 represents the function that provides the perimeter P of the antenna, i.e. the sum expressed in millimetres of the length of the first arm 1' and the second arm 1", depending on the frequency f expressed in MHz, at which the resonance peak occurs.

It contains the same eleven experimental data also present in Fig. 2, which are related to eleven circular antennas, expressed depending on the perimeter rather than the diameter.

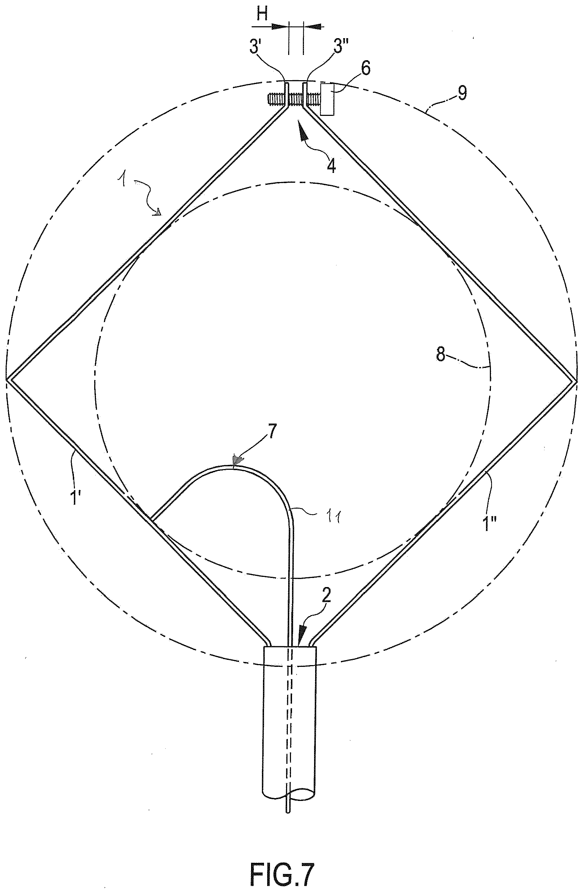

A flat annular antenna also comprises square-shaped antennas, such as that in Fig. 7, or hexagonal or even elliptical, not depicted for the sake of simplicity.

These flat annular antennas have the common characteristic that the arms 1', 1" of the main loop, which are electrically joined at the powering point, are comprised in an ideal circular crown and that their ends 3', 3" move close to each other without actually touching each other.

In the preferred embodiment, the length of the first arm 1' is equal to that of the second arm 1" and the two arms are symmetrical so that the cut is diametrically opposite the powering point 2, i.e. at 180° from the powering point 2.

It is possible, however, that the two arms are not completely symmetrical and also that they are of different lengths.

For example, it is possible that said cut 4 is arranged on the main loop 1 in a position substantially opposite the powering point 2 between 150° and 210°, preferably between 160° and 200°. The more general case of flat annular antenna also comprises the case of circular antenna.

It is of course possible, given a circular antenna with diameter D or an annular, even non-flat, antenna with perimeter P, to determine the frequency f at which there is a particular selectivity of the antenna by inverting the formula (1) or the formula (2).

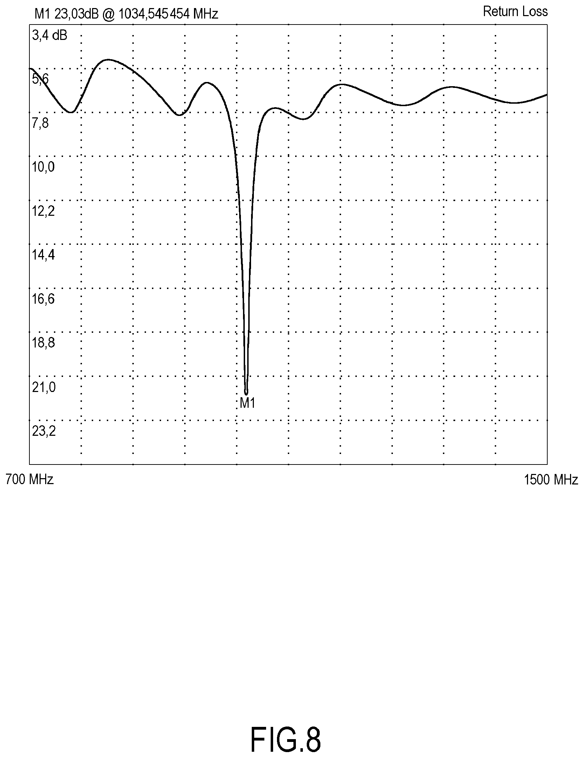

In particular, an experimental test carried out with a square-shaped annular antenna, such as that of Fig. 7, with side L = 30 mm and, therefore, with an area A = 900 mm$^2$, in which the powering point was arranged in one of the corners, whereas the cut 4 was implemented on the opposite angle, showed a pronounced resonance peak at the frequency of 1035 MHz, with a good selectivity as shown in Fig. 8. Fig. 7, the ends 3' and 3" of the two arms 1' and 1" are folded and faced so as to form the plates of a capacitor. A screw 6 made of insulating material, e.g. plastic, is arranged therebetween, so that the distance H between the plates can be accurately adjusted and the capacitance of the capacitor can be varied.

The experiments have however shown that the circular shape of the antenna allows a greater sensitivity and also a greater selectivity, which results e.g. from the comparison between Fig. 3 (circular antenna with diameter D = 40 mm, corresponding to a perimeter P = 125.55 mm, with resonance of 35.9 dB) and Fig. 8 (square antenna with side L = 30 mm corresponding to a perimeter P = 120 mm, with resonance of 23 dB). The method of determining the exact standing wave ratio, by powering the antenna and continuously varying the frequency between two extreme values, can be used to exactly determine the working frequency of an antenna of any shape, e.g. elliptical or square.

Although the circular-shaped antenna is similar to a so-called loop antenna already known in the telecommunications field, its use and also the configuration of the electromagnetic field are very different from a classic loop antenna.

In a loop antenna, the first and second arms of the main loop are not electrically joined at the powering point.

A loop antenna is also used at a working frequency so that its circumference is approximately equal to the wavelength.

According to the invention, on the other hand, the antenna is used at a working frequency which corresponds to a wavelength completely different from the circumference of the antenna.

This allows to have an extremely high selectivity to the pre-set frequency and also the directivity of the antenna is different, since a loop antenna mainly transmits in the direction of its own axis perpendicular to the plane of the antenna, whereas the antenna used according to the invention mainly transmits on the plane of the antenna.

The section of the main loop does not require particular criticalities in order to obtain the selectivity at the calculated frequency. The person skilled in the art can determine the section of the conductor that forms the main loop depending on the structural stability and robustness required by the antenna.

Generally, the dimension of the section of an arm, whether flat or tubular, is in absolute value lower than 5% of the perimeter of the antenna, subject to the requirements of mechanical stability of the structure.

The antenna object of the invention can preferably be made of copper due to the characteristics of low resistance to electromagnetic currents of this material, but it can also be made of other materials with high electrical conductivity without significantly compromising the performance of the invention.

It has also been noted that if the antenna had a tubular shape with a circular section, the cut being made along a tube generatrix, the width (or height of the tube) and the thickness of the tube walls, which constitute the arms, would not have a great importance on the working frequency.

The novelty represented by the achievement of a very high selectivity is explained by the exploitation of the electromagnetic field distribution that is homologous to that of a circular waveguide, in which the pattern of the oscillation modes is imposed by the presence of the cut on the side opposite that of the power supply; this cut prevents the circulation of the surface currents typical of certain oscillation modes in the guides.

In order to test the best transmission capacity of the device according to the invention, an experiment was implemented with four flowmeters, two of which were equipped with a transmitting and receiving device according to the invention, and a circular antenna with diameter of 42 mm, one third with a transmitting and receiving device equipped with a collinear antenna with length of 37.5 cm and one fourth with a transmitting and receiving device equipped with a whip antenna with length of 20 cm. The transmission was carried out by the LoRaWAN system at a frequency of 868 MHz, with transmission of the uplink message every 2 minutes, so that in one week 5040 transmissions were carried out.

The reference point, called LoRaWAN gateway, with which the four flowmeters were to be connected by radio was located in Genova Nervi.

The flowmeters, also called RTUs (Remote Terminal Unit) or terminal points, were positioned in Celle Ligure, at a distance of about 40 km in a straight line from the transmitting station.

A comparison of the RSSI (Received Signal Strength Indication) signal level and SNR (Signal to Noise Ratio) is shown in the table.

The first two rows relate to RTU_014 and RTU_002 equipped with the device according to the invention and circular antenna with diameter of 42 mm.

One of the other two RTUs was equipped with the collinear antenna and the other one with the whip antenna.

| RTU | RSSI (average last week) | SNR (average last week) | Lost received message |
|---|---|---|---|
| RTU_014 | -116.71 dB | -2.79 dB | 4.92% |
| RTU_002 | -116.32 dB | -1.14 dB | 4.3% |
| RTU_016 | -117.99 dB | -4.84 dB | 6.7% |
| RTU_008 | -117.89 dB | -5.3 dB | 9.17% |

From the table it can be seen that the SNR for the two antennas used according to the invention is better than for the other two.

The last column provides the percentage of lost messages.

It can be seen that for the transmitting and receiving devices according to the invention, which are equipped with circular antennas, the percentage of lost messages is 4.92% and 4.3%, whereas for the transmitting and receiving devices equipped with the collinear antenna and the whip antenna are 6.7% and 9.17%.

When there are lost messages, the transmission must be repeated and this results in greater power consumption.

Moreover, a 42 mm diameter antenna is considerably less cumbersome and can be protected much better than a 37.5 cm or 20 cm linear antenna.

Generally speaking, referring to the perimeter P of the antenna and considering an antenna of generic annular shape, which may therefore not lie on a plane, it can be said that the invention relates to a radio transmitting and/or receiving device adapted to transmit and/or receive at least at one pre-set frequency f, said device comprising an antenna which comprises:

- a main loop 1;
- a secondary loop 7 with dimension lower than said main loop 1;
- a powering point 2 arranged on the main loop 1 and adapted to allow the separate power supply of the main loop 1 and secondary loop 7;
- a cut 4 arranged on the main loop 1 in a position diametrically opposite the powering point 2;

a length (11) of said secondary loop (7) comprising a first end which branches off from the supply point (2) and a second end which is joined to an intermediate point of the main loop (1), said main loop 1 and said secondary loop 7 being made of an electrically conductive material, the perimeter P of the main loop 1 being between a minimum value P_MIN = Y·0.85 and a maximum value P_MAX = Y·1.15, where Y is the value expressed in mm obtained by the following formula:

$$Y = 26708.9 \cdot f^{-0.7835} \quad (2)$$

wherein "f" is said pre-set frequency expressed in MHz.

Preferably, said perimeter P is between a minimum value MIN = Y·0.95 and a maximum value MAX = Y·1.05. Even more preferably, said perimeter P is between a minimum value MIN = Y·0.97 and a maximum value MAX = Y·1.03.

The main loop 1 comprises a first arm 1' and a second arm 1" which move away from the powering point 2 and move close to each other without touching each other at their ends 3', 3", thus forming an open annular figure which is not necessarily flat.

In the preferred embodiment, this annular figure lies on a plane.

In the case where the antenna lies on a plane, the loop or annular figure means a circle or an ellipse or a hexagon or a square or a triangle or any figure, even non-symmetrical, inscribed in an ideal circular crown.

Referring to Fig. 7, in which a square-shaped annular antenna is depicted, the circular crown comprises an inner circle 8 and an outer circle 9, so that the ratio between the diameter of the outer circle 9 and the diameter of the inner circle 8 is equal to a square root of 2, equal to about 1.414.

In general, the ratio of the diameter of the outer circle 9 to the diameter of the inner circle 8 is lower than or equal to 3.

Approaching the circular-shape, which is the preferred embodiment, the ratio between the diameter of the outer circle 9 and the diameter of the inner circle 8 is less than or equal to 2.

In the preferred embodiment said main loop is a circle, so that the ratio between the diameter of the outer circle 9 and the diameter of the inner circle 8 is equal to 1.

Preferably, said pre-set frequency f is between a minimum of 500 MHz and a maximum of 500 GHz.

Even more preferably, this pre-set frequency f is between a minimum of 500 MHz and a maximum of 50 GHz.

The annular figure formed by the two arms 1' and 1" of the antenna has a cut 4, whose dimension H is equal to about 1 mm.

It is possible that said cut 4 has a dimension H lower than 1% of the sum of the length of the two arms 1', 1".

It is also possible that said cut 4 has a dimension H lower than 0.5% of the sum of the length of the two arms 1', 1" or also that said cut 4 has a dimension H lower than 0.3% of the sum of the length of the two arms 1', 1".

It is of course possible that, for an adjustment of the operating frequency f, the antenna comprises a capacitor arranged between the ends 3', 3" of the two arms 1', 1'' and that for a fine-tuning of such frequency f, said capacitor has a variable capacitance.

This capacitor can be implemented as in Fig. 7 with the ends 3', 3" folded so as to obtain two parallel, facing straps, which act as plates of a capacitor. These straps are joined by a screw 6 made of insulating material, which allows to adjust their distance, thus adjusting the capacitance of the capacitor.

The variation of the dimension H of the cut 4 can cause the working frequency f to vary, leaving the diameter almost unchanged, thus allowing an adjustment with respect to the formula (1) or formula (2) to obtain the desired frequency.

The patent also desires to protect the use of an antenna that comprises

- a main loop 1;

- a secondary loop 7 with dimension lower than said main loop 1;
- a powering point 2 arranged on the main loop 1 and adapted to allow the separate power supply of the main loop 1 and secondary loop 7;
- a cut 4 arranged on the main loop 1 in a position diametrically opposite the powering point 2;

a length 11 of said secondary loop 7 comprising a first end which branches off from the powering point 2 and a second end which is joined to an intermediate point of the main loop 1, said main loop 1 and said secondary loop 7 being made of an electrically conductive material, said antenna being used at a pre-set frequency f such that the perimeter P equal to the sum of the length of the first arm 1' and the second arm 1", expressed in millimetres, is between a minimum value P_MIN = Y·0.85 and a maximum value P_MAX = Y·1.15, where Y is the value expressed in millimetres obtained by the following formula:

$$Y = 26708.9 \cdot f^{-0.7835}$$

wherein "f" is said pre-set frequency expressed in MHz.

Preferably, the patent also desires to protect the use of an antenna 1, with characteristics such as those described above, at a pre-set frequency f such that the perimeter P expressed in millimetres is between a minimum value P_MIN = Y·0.95 and a maximum value P_MAX = Y·1.05.

Even more preferably, it is also intended to protect the use of an antenna, with characteristics like those described above, at a pre-set frequency f such that the perimeter P expressed in millimetres is between a minimum value P_MIN = Y·0.97 and a maximum value P_MAX = Y·1.03.

The patent also intends to protect the use of an antenna with characteristics such as those described above at a pre-set frequency f between a minimum of 500 MHz and a maximum of 500 GHz or preferably between a minimum of 500 MHz and a maximum of 50 GHz.

It is also intended to protect the use of an antenna as described above, wherein the main loop 1 is inscribed in an ideal circular circle comprising an inner circle 8 and an outer circle 9, so that the ratio of the diameter of the outer circle 9 to the diameter of the inner circle 8 is less than or equal to 3, preferably less than or equal to 2, even more preferably said main loop is a circle opened by a cut 4.

It is also intended to protect the use of an antenna such as that described above, in which said cut 4 has a dimension H equal to about 1 mm or lower than 1% of the perimeter P, preferably said cut 4 has a dimension H lower than 0.5% of the perimeter P, even more preferably this dimension H is lower than 0.3% of the perimeter P.

The patent also intends to protect the use of an antenna such as that described above and comprising a capacitor arranged between the ends 3', 3" of the two arms 1', 1", said capacitor being preferably of variable capacitance.

In its operation the receiving and/or transmitting device, according to the invention, allows to receive and/or transmit in a highly selective manner at a pre-set frequency f, so as to cut off the noise and transmissions that take place at frequencies even very close to the pre-set frequency f.

This allows to use a very low signal transmission power, even when large distances have to be covered. The same thing happens when using an antenna with the characteristics described, e.g. with diameter D or perimeter P (equal to the sum of the length of the first and second arms 1' and 1"), at a frequency such as the one that can be obtained from the formulas (1) and (2) or the graphs of figures 2 and 6.

Using the technique of switching on the receiving device and the transmitting device only at pre-set instants and only for a short time interval sufficient to carry out the desired data transmission, in addition to this high selectivity of the antenna at the pre-set frequency f, results in further reducing the power consumption and increasing the life of the battery which powers the circuit.

Once the working frequency f has been established, the antenna is designed on the basis of formulas (1) or (2), or in any case around the values provided by formulas (1) or (2), so as to obtain an antenna that works in a highly selective manner at the pre-set frequency f.

The formulas (1) and (2) respectively provide the diameter D and the perimeter P of an antenna, according to the invention, at the working frequency f. For circular antennas, these formulas provide the diameter D and the perimeter P of the same circle. The formula (2) is more general than the formula (1), since the perimeter P of the antenna, i.e. the sum of the length of its arms, can refer to annular antennas of any shape, even not lying on a plane.

A fine-tuning can be achieved by varying the capacitance of the capacitor possibly placed between the ends 3', 3".

Once the antenna has been implemented and by powering it and continuously varying the frequency between two extreme values, the actual working frequency can be accurately determined.

An industrial production process can enable extremely small antennas to be implemented with great precision for use with high frequencies, such as those used by e.g. 5G.

For example, for a frequency f = 10 GHz, the diameter of a circular antenna for a transmitting and/or receiving device according to the invention is equal to only D = 7 mm (experimental value).

For a frequency f = 500 GHz, the diameter of a circular antenna for a transmitting and/or receiving device according to the invention is equal to only D = 0.29 mm (calculated value).

These small antennas can be difficult to handcraft, but they can be easily implemented by an industrial production on printed circuits.

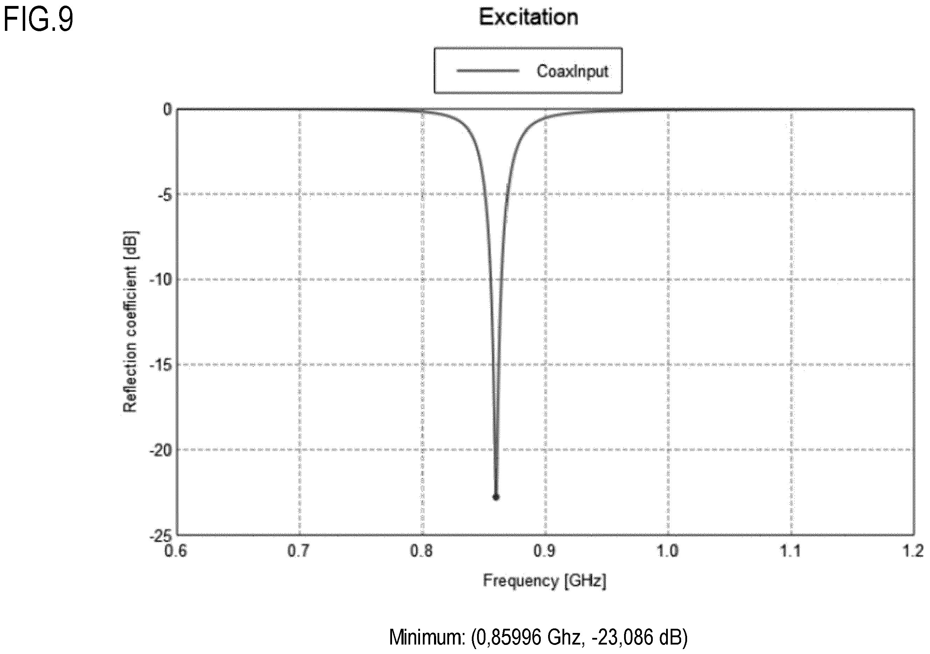

A simulation was also carried out by using a finite element programme to obtain the standing wave ratio of a circular antenna with diameter D = 38.6 mm, conductor thickness of 1 mm and width of 10 mm between the frequencies of 600 MHz and 1200 MHz, thus achieving the results depicted in fig. 9, in which a resonance peak of 23.086 dB at 859.96 MHz can be noticed.

The figure shows that the peak is very narrow and this confirms the optimal selectivity of the antenna used at this frequency.

The design of an antenna according to the invention starts from the idea of using a waveguide as an antenna, dimensioning the waveguide to limit the resonance to the $TE_{10}$ mode only.

By imposing this modal resonance, there is a pronounced frequency selectivity characteristic.

It is possible to implement a radio transmitting and/or receiving device adapted to transmit and/or receive at least at one pre-set frequency f, which comprises an antenna similar to the one already described, wherein said first and second arms are two waveguide portions.

In this case, the antenna would not have the shape of two arched filaments but a tubular or cylindrical shape.

A waveguide used as an antenna would have the defect of being too directional for some applications, but it could be advantageous for other applications.

An advantage could be when two transmitting and receiving points are fixed.

The use of these antennas in an appropriate manner, including their orientation, allows to considerably reduce the noise caused by transmissions on adjacent frequencies and, therefore, to decrease the necessary transmission power.

For other applications, the excessive directivity of a waveguide and, therefore, tubular- or cylindrical-shaped antenna could be overcome by arranging two waveguide antennas close to each other but one at 90° with respect to the other.

It is also possible to have more than two differently oriented waveguide antennas.

Thanks to the fact that a radio transmitting and/or receiving device adapted to transmit and/or receive at least at one pre-set frequency f, according to the invention, has a high selectivity, it is possible to reduce the power used by the device and thus obtain a longer life of the battery powering it. The same applies to the use, according to the invention, of an annular- or circular-shaped antenna at a frequency f, so that there is a high selectivity which cannot be obtained when the same antenna is used at different frequencies, in particular when such an antenna is used at a frequency where its perimeter P is equal to the wavelength, such as for a loop antenna.

Thanks to the fact that the dimensions of the antenna are extremely small with respect to those of other antennas currently used at the same frequency f, the working frequency f being set, the weight of the antenna according to the invention is lower and the protection of said antenna is simpler and lighter. It is, of course, possible to provide for radio transmission to take place at very small time intervals and pre-set times, thus synchronising the transmitter and receiver in order to further limit the battery consumption.

In some applications, even a high directivity of a waveguide or tubular antenna according to the invention could be used, in addition to selectivity, to implement a radio transmitting and/or receiving device that further lowers the required power.

**Claims**

**1.** Radio transmitting and/or receiving device adapted to transmit and/or receive at least at one pre-set frequency (f), said device comprising an antenna which comprises:

- a main loop (1);
- a secondary loop (7) with dimension smaller than said main loop (1);
- a powering point (2) adapted to allow the separate power supply of the main loop (1) and secondary loop (7);
- a cut (4) arranged on the main loop (1);

a length (11) of said secondary loop (7) comprising a first end which branches off from the powering point (2) and a second end which is joined to an intermediate point of the main loop (1), said main loop (1) and said secondary loop (7) being made of an electrically conductive material, said antenna being **characterised in that** the perimeter (P) of the main loop (1) is between a minimum value P_MIN = Y·0.85 and a maximum value P_MAX = Y·1.15, where Y is the value expressed in mm obtained by the following formula:

$$Y = 26708.9 \cdot f^{-0.7835}$$

wherein "f" is said pre-set frequency expressed in MHz.

2. Device according to the preceding claim, **characterised in that** said perimeter (P) is between a minimum value P_MIN = Y·0.95 and a maximum value P_MAX = Y·1.05.

3. Device according to the preceding claim, **characterised in that** said perimeter (P) is between a minimum value P_MIN = Y·0.97 and a maximum value P_MAX = Y·1.03.

4. Device according to one or more of the preceding claims, **characterised in that** said cut (4) is arranged on the main loop (1) in a position opposite the powering point (2) between 150° and 210°, preferably between 160° and 200°, even more preferably said cut (4) is arranged in a position diametrically opposite the powering point (2).

5. Device according to one or more of the preceding claims, **characterised in that** said main loop (1) is arranged on a plane and is inscribed in an ideal circular crown comprising an inner circle (8) and an outer circle (9) so that the ratio of the diameter of the outer circle (9) to the diameter of the inner circle (8) is less than or equal to 3, preferably the ratio of the diameter of the outer circle (9) to the diameter of the inner circle (8) is less than or equal to 2, even more preferably said main loop is a circle opened by a cut 4.

6. Device according to one or more of the preceding claims, **characterised in that** said pre-set frequency (f) is between a minimum of 500 MHz and a maximum of 500 GHz.

7. Device according to one or more of the preceding claims, **characterised in that** said cut (4) has a dimension (H) equal to 1 mm or said cut (4) has a dimension (H) lower than 1% of the perimeter (P), preferably said cut (4) has a dimension (H) lower than 0.5% of the perimeter (P), even more preferably said cut (4) has a dimension (H) lower than 0.3% of the perimeter (P).

8. Device according to one or more of the preceding claims, **characterised in that** said main loop (1) comprises a first arm (1') and a second arm (1") electrically joined at the powering point (2), said first and second arms (1', 1") terminating respectively with a first and a second end (3', 3") and that said antenna comprises a capacitor arranged between the ends (3', 3") of the two arms (1', 1"), said capacitor being preferably of variable capacitance.

9. Use of an antenna that comprises

   - a main loop (1);
   - a secondary loop (7) with dimension smaller than said main loop (1);
   - a powering point (2) adapted to allow the separate power supply of the main loop (1) and secondary loop (7);
   - a cut (4) arranged on the main loop (1);

   a length (11) of said secondary loop (7) comprising a first end which branches off from the powering point (2) and a second end which is joined to an intermediate point of the main loop (1), said main loop (1) and said secondary loop (7) being made of an electrically conductive material, **characterised in that** said antenna (1) is used at a pre-set frequency (f) such that the perimeter (P) of the main loop (1) is between a minimum value P_MIN = Y·0.85 and a maximum value P_MAX = Y·1.15, where Y is the value expressed in mm obtained by the following formula:

$$Y = 26708.9 \cdot f^{-0.7835}$$

wherein "f" is said pre-set frequency expressed in MHz,

**10.** Use of an antenna according to the preceding claim, **characterised in that** said perimeter (P) is between a minimum value P_MIN = Y·0.95 and a maximum value P_MAX = Y·1.05, preferably said perimeter (P) is between a minimum value P_MIN = Y.0.97 and a maximum value P_MAX = Y·1.03.

**11.** Use of an antenna according to claim 9 or 10, **characterised in that** said cut (4) is arranged on the main loop (1) in a position opposite the powering point (2) between 150° and 210°, preferably between 160° and 200°, even more preferably said cut (4) is arranged in a position diametrically opposite the powering point (2).

**12.** Use of an antenna according to one or more of claims 9 to 11, **characterised in that** said main loop (1) lies on a plane and is inscribed in an ideal circular crown comprising an inner circle (8) and an outer circle (9) so that the ratio of the diameter of the outer circle (9) to the diameter of the inner circle (8) is less than or equal to 3, preferably less than or equal to 2, even more preferably said main loop (1) is a circle.

**13.** Use of an antenna according to one or more of claims 9 to 12, **characterised in that** said pre-set frequency (f) is between a minimum of 500 MHz and a maximum of 500 GHz.

**14.** Use of an antenna (1) according to one or more of claims 9 to 13, **characterised in that** said cut (4) has a dimension (H) equal to 1 mm or said cut (4) has a dimension (H) lower than 1% of the perimeter (P), preferably said cut (4) has a dimension (H) lower than 0.5% of the perimeter (P), even more preferably this dimension (H) is lower than 0.3% of the perimeter (P).

**15.** Use of an antenna (1) according to one or more of claims 9 to 14, **characterised in that** said main loop (1) comprises a first arm (1') and a second arm (1") electrically joined at the powering point (2), said first and second arms (1', 1") terminating respectively with a first and a second end (3', 3") and that said antenna comprises a capacitor arranged between the ends (3', 3") of the two arms (1', 1"), said capacitor being preferably of variable capacitance.

FIG.1

FIG.2

M1 35,93dB @ 915,272727 MHz                                                                 Return Loss

```
0,0 dB

4,1

8,2

12,3

16,4

20,5

24,6

28,7

32,8        M1

36,9
```

700 MHz                                                                                          1500 MHz

# FIG.3

M1 12,23dB @ 1486,181818 MHz                                    Return Loss

700 MHz                                                         3000 MHz

# FIG.4

M1 14,92dB @ 2163,636363 MHz                                    Return Loss

2,0 dB

3,7

5,4

7,1

8,8

10,5

12,2

13,9

                                                    M1

15,6

17,3

700 MHz                                                         3000 MHz

# FIG.5

## Perimeter

$f(x) = 26708{,}9\,x^{-0{,}7835}$

Legend: perim data

FIG.6

FIG.7

M1 23,03dB @ 1034,545 454 MHz                    Return Loss

| 3,4 dB |
| 5,6 |
| 7,8 |
| 10,0 |
| 12,2 |
| 14,4 |
| 16,6 |
| 18,8 |
| 21,0 |
| M1 |
| 23,2 |

700 MHz                                          1500 MHz

# FIG.8

FIG.9

Excitation

Minimum: (0,85996 Ghz, -23,086 dB)

EP 4 047 823 A1

Europäisches
Patentamt

European
Patent Office

Office européen
des brevets

# EUROPEAN SEARCH REPORT

Application Number

EP 22 15 7584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 324 462 A (LEEDS LAURENCE M ET AL) 13 July 1943 (1943-07-13) * abstract; figures 2, 5,7 * * column 2 – column 5 * ----- | 1-15 | INV. H04B1/40 H01Q1/36 |
| X | JP 5 702673 B2 (KDDI CORP) 15 April 2015 (2015-04-15) * abstract; figure 2 * * paragraphs [0002], [0037] – [0039] * ----- | 1-15 | |
| X | JP 2010 161495 A (KDDI CORP; NAT UNIV YOKOHAMA) 22 July 2010 (2010-07-22) * the whole document * ----- | 1-15 | |

TECHNICAL FIELDS
SEARCHED (IPC)

H04B
H01Q

The present search report has been drawn up for all claims

| Place of search | Date of completion of the search | Examiner |
|---|---|---|
| Munich | 23 May 2022 | Almenar Muñoz, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ..................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 15 7584

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2022

| Patent document cited in search report | | Publication date | Patent family member(s) | | Publication date |
|---|---|---|---|---|---|
| US 2324462 | A | 13-07-1943 | GB | 561251 A | 11-05-1944 |
| | | | US | 2324462 A | 13-07-1943 |
| JP 5702673 | B2 | 15-04-2015 | JP | 5702673 B2 | 15-04-2015 |
| | | | JP | 2012253547 A | 20-12-2012 |
| JP 2010161495 | A | 22-07-2010 | JP | 5339349 B2 | 13-11-2013 |
| | | | JP | 2010161495 A | 22-07-2010 |

EPO FORM P0459

For more details about this annex : see Official Journal of the European Patent Office, No. 12/82